# EUROPEAN PATENT APPLICATION

(11) **EP 4 412 027 A1**
(43) Date of publication of application: **07.08.2024**
(21) Application number: 23154579.9
(22) Date of filing: 02.02.2023
(51) Int. Cl.: H02J 7/00

(54) **ENERGY MANAGEMENT SYSTEM FOR AUTONOMOUS WORK ROBOTS**

(71) Applicant: Honda Research Institute Europe GmbH, 63073 Offenbach/Main (DE)
(72) Inventor: Einecke, Dr. Nils, 63073 Offenbach/Main (DE)
(74) Representative: Beder, Jens

(57) **Abstract**

The present invention relates to a method for determining a schedule for charging an energy storage means (13) of an autonomous work robot (i). The method comprises a step (Si) of acquiring a work schedule of the autonomous work robot and a step (S3) of determining the charging schedule based on the work schedule in order to improve a cost function that is optimal when an optimal amount of work time within the work schedule is achieved.

## Description

The invention is related to the technical field of autonomous work robots like autonomous vacuum cleaning or autonomous lawn mowers, and more particularly, to a method for determining a charging schedule for an autonomous work robot.

Autonomous work robots have a battery that they recharge autonomously by driving to a charging station. Typically, the autonomous work robot (machine) has a fixed battery-charging scheme, in which the robot drives to the charging station when the battery level (state-of-charge) reaches a preset minimum threshold, e.g., 30%, to charge the battery to a target level, e.g., 85% or 100%.

Additionally, the work robots often have a work schedule that specifies time spans within, for example, a day where they are allowed to perform their work operation. Such a work schedule in combination with the battery-charging scheme can lead to inefficiencies in operation. For example, if the typical battery capacity allows one hour of operation, but allowable working time of a time span is 1.5 hours, the work machine will start working for one hour and then return to the charging station. However, if it takes longer than 30 minutes for the battery to charge to the target value, the remaining working time is only used for charging and not for working.

It is an object of the present invention to provide a method and system, which reduce the above problems. In particular, an object of the present invention is to provide a method, a program, an apparatus and a system, with which the effectiveness of the robot's work can be improved with low effort and costs, i.e., without increasing the battery capacity.

This object is achieved by a method, a program, an apparatus and a system according to the enclosed independent claims. Advantageous features of the present invention are defined in the corresponding dependent claims.

According to the present invention, a method for determining a schedule for charging an energy storage means of an autonomous work robot comprises a step of acquiring a work schedule of the autonomous work robot and a step of determining the charging schedule based on the work schedule in order to improve a cost function that is optimal when an optimal amount of work time within the work schedule is achieved.

In this way, the method aligns the charging schedule (scheme) with the work schedule in order to use the working time more effectively. The method can be a computer implemented method and/or can be performed by the robot, a changing station or another apparatus, e.g., smart phone, tablet, personal computer or internet server. The work robot can be an autonomous lawn mower, an autonomous vacuum robot, an autonomous cleaning robot, a household robot, a warehouse robot or a robot guide.

The charging schedule can be determined during the work of the robot or before it and specifies the time (duration) of a charging operation. The time of the charging operation can be specified/set directly or indirectly, e.g., by the minimum threshold and/or the target level.

The work schedule can contain at least one time span in which the autonomous work robot is allowed to work and the charging schedule can contain at least one charging operation in the time span, wherein the cost function is improved by setting the time of the charging operation to increase the total work time within the time span or the charging schedule. For example, the remaining working time at the time when the energy storage means needs to be charged can be determined und the time of the charging operation can be set to a fraction, e.g., half, of the remaining working time.

The state of charge of the energy storage means at the beginning of the time span can be detected or predicted to determine whether the state of charge at the beginning of the time span is sufficient for work over the entire time span or a charging operation within the time span is necessary.

Alternatively, the time of the charging operation can be calculated exactly based on the remaining working time, the charging curve of the energy storage means and the power consumption of the active robot per amount of time (discharge rate), so that the energy storage means is charged to such an extent that it does not need to be recharged until the end of the time span. With the information on time span, charging curve and power consumption, the remaining working time can be predicted. Charge curve and power consumption can be specified by the manufacturer and/or determined/updated during operation.

Particularly when there are closely spaced charging or work operations, optimization can be performed, wherein the cost function is optimized at least by optimizing the time of the charging operation(s) to maximize the total work time within the time span(s) based on the information on the charging curve and the power consumption.

The state of charge of the energy storage means can be detected/measured in real time or predicted for the time span based on the information on the power consumption, wherein the energy storage means is to be charged to a target state of charge when the detected or predicted state of charge reaches a minimum threshold and the minimum threshold and/or the target state of charge is varied for optimizing the time of the charging operation.

Energy consumption (discharge rate) can be constant over time or also depend on the working region. A model or characteristic curve can be determined/learned for such a working range, wherein the state of charge necessary to work over the time span is determined/predicted based on the work-area specific model indicating energy consumed by the autonomous work robot per amount of time.

In addition, the method can further comprise a step of measuring energy consumption of the autonomous work robot during work operation, a step of predicting the energy consumption based on a work-area specific model, a step of comparing the measured energy consumption and the predicted energy consumption and a step of adapting the minimum threshold in order to optimize the time of the charging operation if a difference between the predicted energy consumption and the measured energy consumption reaches a defined threshold.

Different aspects of the cost function are combined in the weighted manner. For example, the energy storage means can be charged by renewable energy generated by a photovoltaic system and the cost function is optimized at least by optimizing the time of the charging operation to maximize the total work time within the work schedule and by maximizing the amount of renewable energy used for charging.

Alternatively, or in addition, factors having an influence on the life-time of the energy storage means including charging intervals, charging time and/or charge level can be set and the cost function is optimized at least by optimizing the time of the charging operation to maximize the total work time within the work schedule and by increasing the life-time of the energy storage means.

Alternatively, or in addition, the total power consumption for all the charging operations of the charging schedule can be determined and the cost function is optimized at least by optimizing the time of the charging operation to maximize the total work time within the work schedule and by minimizing the total power consumption.

The cost function can be optimized to increase the total work time within the charging schedule using gradient descent, grid search, pattern search, binary search, linear programming, evolutionary optimization or ant algorithms.

The work schedule can be optimized in order to minimize the total charging times within the time spans and to minimize deviations from the acquired work schedule.

According to the present invention, a program that, when running on a computer or loaded onto a computer, causes the computer to execute the steps of the described method.

According to the present invention, an apparatus for determining a schedule for charging an energy storage means of an autonomous work robot comprises a processor configured to perform the steps of the described method.

According to the present invention, an autonomous work system comprises the apparatus, the autonomous work robot and at least one charging station configured to charge the energy storage means of the autonomous work robot.

The system and/or any of the functions described herein may be implemented using individual hardware circuitry, using software functioning in conjunction with at least one of a programmed microprocessor, a general purpose computer, using an application specific integrated circuit (ASIC) and using one or more digital signal processors (DSPs).

Embodiments of the invention are discussed in detail with reference to the enclosed figures, in which
- Fig. 1: shows a schematic of an autonomous work system according to an embodiment of the present invention,
- Fig. 2: shows a typical prior art charging scheme,
- Fig. 3: shows an optimized charging scheme according to an embodiment of the present invention,
- Fig. 4: shows different charging characteristics,
- Fig. 5 to Fig. 8: show different stages of optimization a charging schedule according to an embodiment of the present invention, and
- Fig. 9: shows a flowchart of the method according to an embodiment of the present invention.

In the figures, same reference numbers denote same or equivalent structures. The explanation of structures with same reference numbers in different figures is avoided where deemed possible for sake of conciseness.

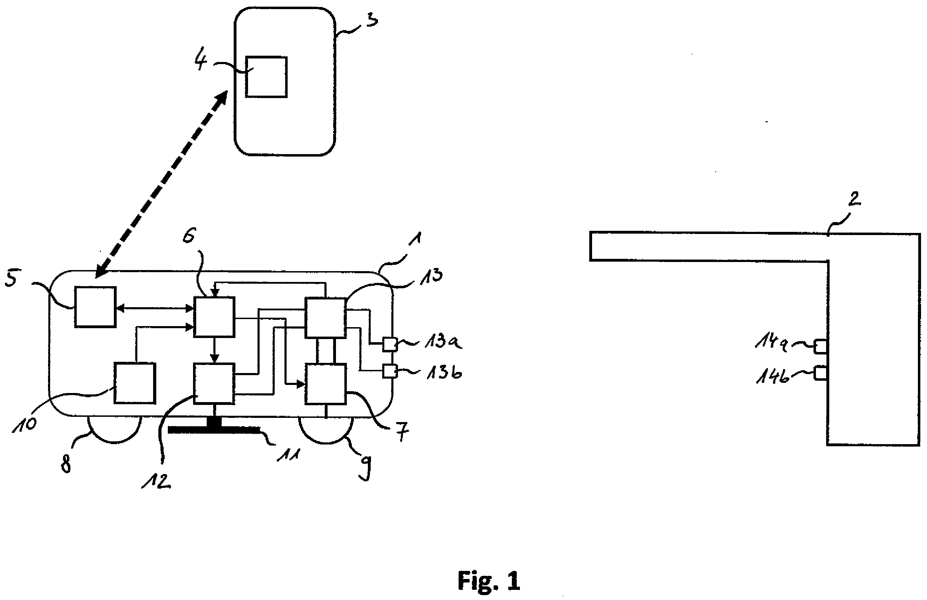

FIG. 1 shows an autonomous work system according to an embodiment of the present invention, comprising an autonomous work robot 1, a charging station 2 and a mobile control device 3. The mobile control device 3 can be a smartphone with an app for generating a work schedule and has a transceiver 4 for wireless transmission of the work plan to the autonomous working robot 1. The autonomous work robot 1 is a lawn mower and comprises a transceiver 5 for receiving the work schedule, a data storage means for storing the work schedule (not shown), a control unit 6, an electric drive motor 7, front wheels 8, rear wheels 9 driven by the electric drive motor 7, a camera 10 for sensing the environment of the robot 1, a blade 11 driven by an electric motor 12, a battery 13 (energy storage means) and connectors 13a, 13b to connect the battery 13 to charging terminals 14a, 14b of the charging station 2.

The electric drive motor 7 is controlled by the control unit 6 so that the direction and speed of the autonomous work robot 1 is controlled. Thus, if an obstacle or an edge of an area to be mowed is detected by the camera 10 the control unit 6 controls the electric drive motor 7 in such a way that a collision with such an obstacle can be avoided. Other ways of obstacle detection are well-known in the prior art and can be used for obstacle detection and orientation.

The control unit 6 controls all the functions of the work robot 1. These functions include not only driving the working robot 1 and its working operation, i.e., mowing operation in line with the work schedule, but also charging the battery 13. For this purpose, the control unit 6 monitors the state of charge (SOC) of the battery 13 and controls the electric drive motor 7 to move the working robot 1 to the charging station 2 when the battery needs to be charged.

Many autonomous working machines such as lawn mowers or floor cleaning robots use simple strategies for charging. The most important elements are thresholds for the state of charge, which are used to decide when to return to charging station 2, and the level of the state of charge for the waiting time at the charging station. In detail, the modern strategies are based on some basic principles. First, a minimum threshold is set for the state of charge at which the robot 1 returns to the charging station 2. This means that while working, the state of charge is monitored and the robot 1 returns to the charging station 2 for recharging when it falls below the threshold. Second, there is often an upper threshold which the state of charge needs to surpass before the robot 1 would leave the charging station 2. Third, there is a storage/idle charge state to which the battery 13 is charged and held after returning to the base station when no further immediate work is scheduled. Charging to the upper threshold is started some time before the next scheduled work, so that the upper threshold is reached only immediately before the work. The reason for this is to extend the life of the battery 13.

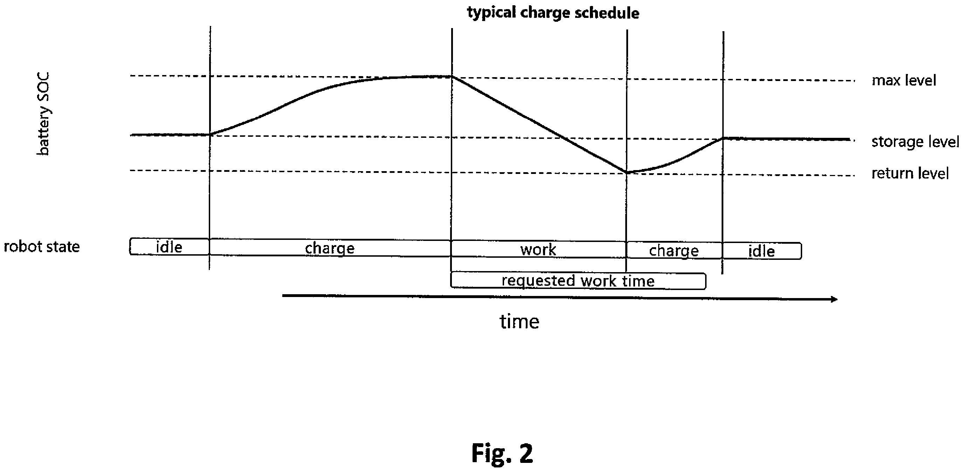

Fig. 2 shows a typical scenario for such charging scheme. In times of no expected operation, i.e., no requested work time close in time, the battery 13 is hold at the storage charge state (storage level). The requested work time shown in Fig. 2 is set by the user via the smartphone app. At a suitable point in time before the requested work time span the battery 13 is charged to the upper threshold (max level). When the requested work time is reached the robot 1 starts working thereby depleting the battery 13. If the requested work time span is too long, the battery 13 will reach the minimum threshold (return level). Then robot 1 returns to the charging station 2 for charging. During the charging, the scheduled work time span ends. Thus, the battery charging is only continued until the storage charge state (storage level) is reached.

While these strategies are simple and robust, they are inefficient in many cases. This is especially true for cases, where the requested work time slot surpassed the capacity of the battery 13, resulting in unused potential work time.

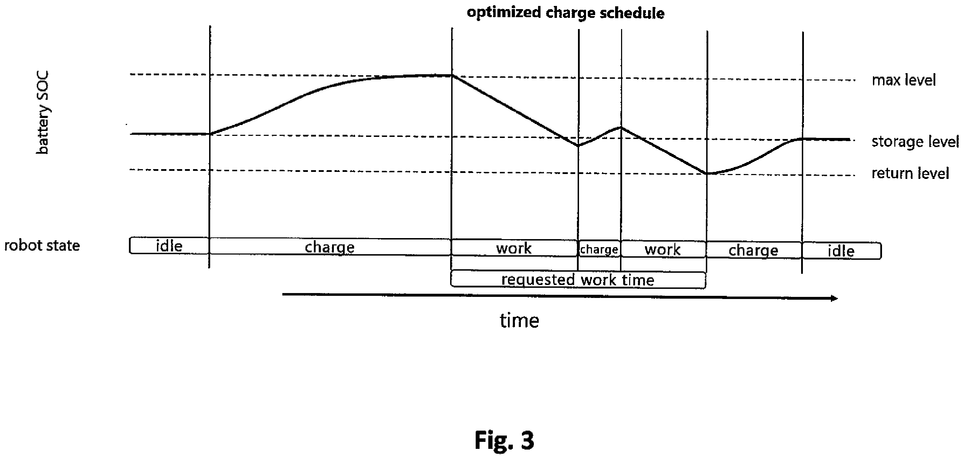

Fig. 3 shows an optimized charge scheme according to an embodiment of the present invention. The control unit 6 reads the work schedule and information on battery power consumption (discharge rate) and charging characteristic from the data storage means and determines whether the battery capacity is sufficient for the requested work time span when the battery 13 is charged to the upper threshold (max level). If the battery capacity is not sufficient for the requested working time span, i.e., a charging operation is required within the working time span, and if almost or all the remaining working time is required for the (normal) charging operation, the control unit 6 reduces the time of the required charging operation so that the robot 1 can work again within the time span and the remaining working time is not only used for charging.

In Fig. 3, the time (duration) of the required charging operation is calculated so that the state of charge does not reach the minimum threshold (return level) until just before the end of the working time span, wherein the charging operation is started before the battery 13 reaches the minimum threshold (return level). However, the charging operation can be started at many positions within the working time span, wherein the charging operation must be started at the latest when the battery 13 reaches the minimum threshold (return level) and the charging process can be started at the earliest when the capacity of the battery 13 has decreased by the amount that is recharged in the charging process.

Start and/or end of the charging operation can be controlled by changing the minimum threshold (return level) and/or the upper threshold (max level) for the working time span to adapt the charging strategy such that the work time is maximized.

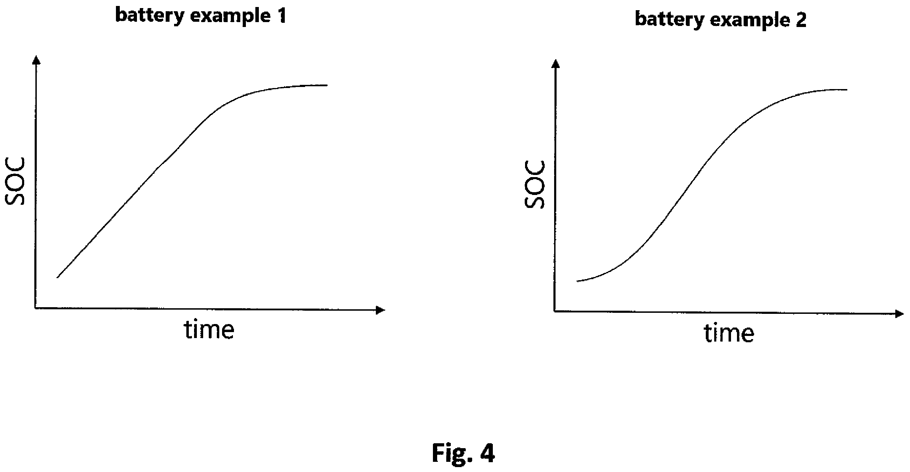

Charging characteristic and energy consumption affect the time of the charging operation. Fig. 4 shows two different charging characteristics exemplarily. If this information is not available in advance, it can also be measured during operation and efficiently stored in an array structure, a look-up table, or by approximation with low-order functions in the data storage means. It would also be possible to measure and model work-area or site-specific energy consumption, since consumption may vary, for example, because a work area has many inclines that require more energy, or because work in certain areas generally requires more energy. The work-area specific model can be considered for the optimization.

A plurality of work time spans/slots can be set by the user in the work schedule. The user can configure the work schedule to avoid the working noise at inconvenient times such as at night, or not to be disturbed by the robot 1 when the user is in the working area.

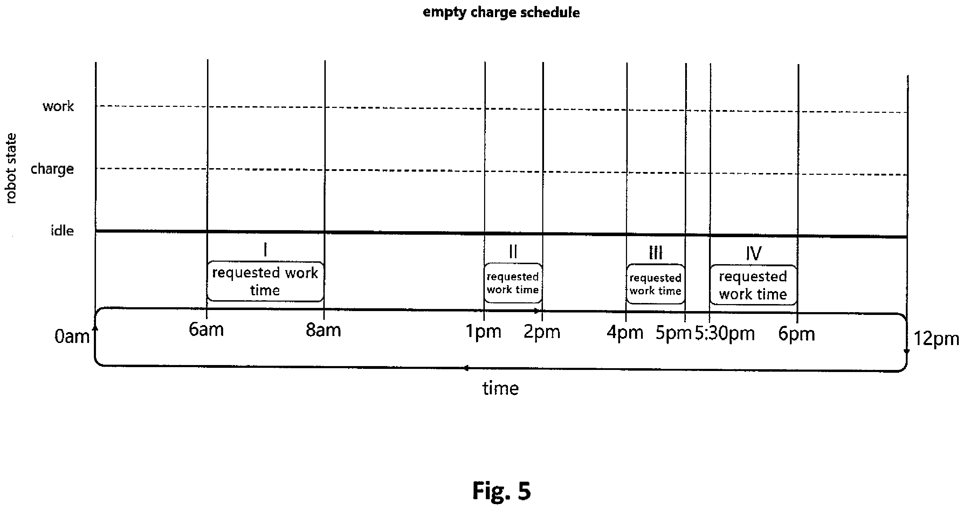

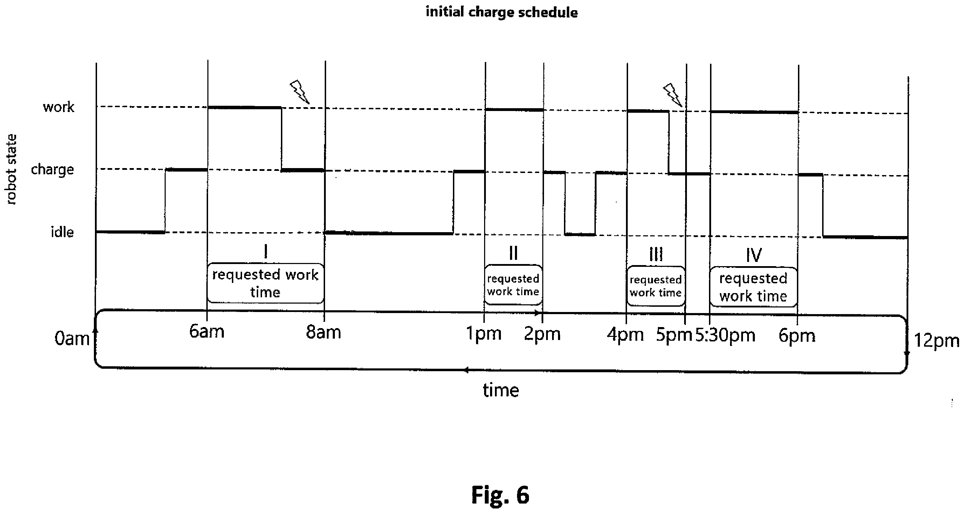

Fig. 5 shows a daily work schedule with four user-defined work time spans I, II, II and IV, wherein the working time spans have different time intervals between each other and in some cases have different durations. Fig. 6 shows the initial charging/work schedule with non-optimized charging scheme, which can be generated by the control unit 6 to detect work time spans where the battery 13 reaches the minimum threshold (return level) before the end of the working period. Since working time spans I and III each contain a charging operation, the initial charging schedule can be optimized.

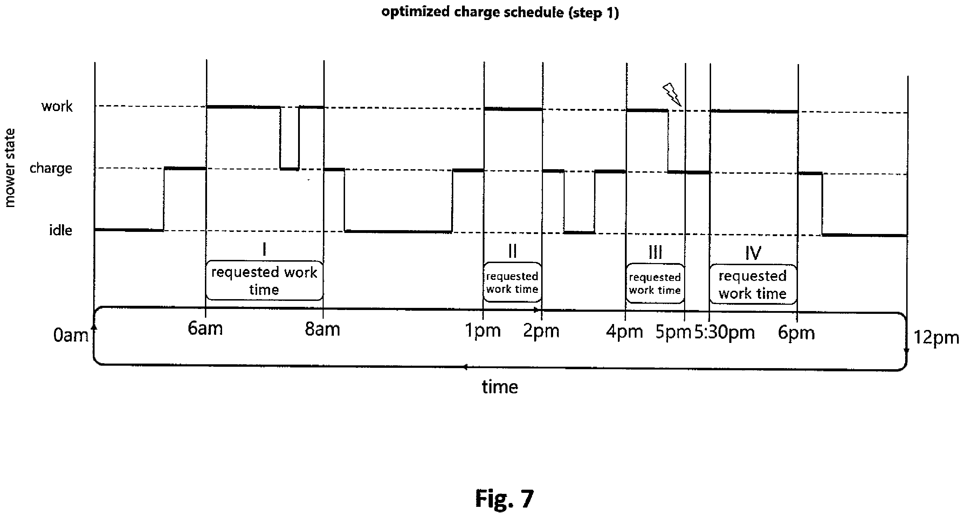

As shown in Fig. 7, the total work time in time span I is improved by reducing the time of the charging operation, wherein the charge time is chosen such that after it the battery 13 has enough energy to supply the robot 1 for the remaining work time span I. Reducing the time of the charging operation in the work time span III may improve the total work time in time span III. However, since the time interval between the work time spans III and IV is very small, shorting the charging operation can reduce the battery capacity so that it is no longer fully sufficient for the work time span IV.

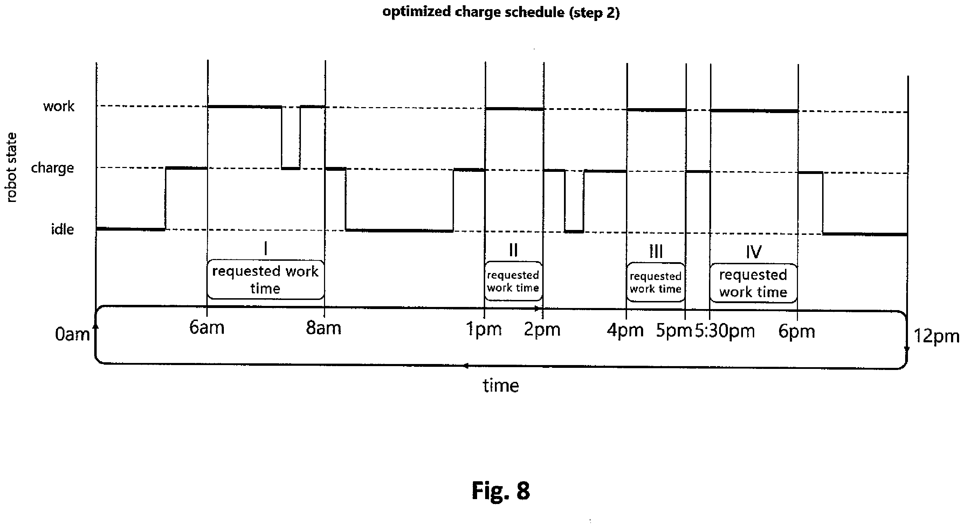

Thus, the control unit 6 performs optimization on the whole charging schedule including time intervals between the work time spans using, for example, Covariance matrix adaptation evolution strategy (CMA-ES). An exemplary result is shown in Fig. 8. It can be seen that extending the charging operation before work time span III results in a capacity of the battery 13 that is both sufficient for the entire work time span III and, with the short charging operation before time window IV, allows continuous work in time span IV.

It would also be advantageous to monitor deviations from the determined charging schedule, e.g., due to unexpectedly higher energy consumption, and to adjust the schedule during operation. The optimization could concentrate on each requested work time slot/span separately. But it is more favorable to take consecutive requested work time slots and intervals between the slots into account as these might influence the optimal charge scheme for each other. For example, if requested work time slots are close together, the recharging of the battery 13 after one slot could overlap with the next requested work time slot. In the best case, the optimization should take the repetitive nature of user defined work time slots into account. Typically, one can set work time slots for each weekday. Hence, the requested work time slots repeat after a week. Or as shown in Fig. 8, every day, if the times for each day are the same.

The optimization can be realized using known optimization techniques like gradient descent, grid search, pattern search, binary search, linear programming, evolutionary optimization, or ant algorithms. As a start point for optimization the standard state-of-the-art solution can be taken.

The optimization would be governed by two major things. First, it would try to move charging times as much as possible out of the requested work time slots. Second, it would try to introduce charging attempts during requested work time slots whenever a work time slot surpasses a certain threshold. This threshold could be derived from the maximal usable battery capacity and the resulting work time using all that energy. The usable battery capacity would be chosen such that the robot has at least enough energy left to return to the charging station 2 for recharging.

As mentioned earlier the battery characteristics and energy consumption can be given a priori or measured during the operation of the robot 1. Thus, improving the estimation of the energy consumption and planning of charging over time. For representing the curve, a time dependent representation can be used, i.e., store a time-dependent function SOC(t) or an array. Since autonomous work machines have often restricted compute and memory resources in order to reduce energy consumption, it is favorable to store the values in a lightweight integer array. Most efficient would be an array of unsigned 8bit integers. For the charging characteristic array an entry of 0 means 0% SOC and 255 means 100% SOC. Alternatively, 100 means 100% SOC.

Another alternative could also be, that the control unit 6 suggests different work time spans in order to improve the actual work time. These suggestions could be feedback to the user, also during setting the work schedule in order to warn about unfavorable slots or slot relations.

Ideally, the optimization would take known information about battery charging curves and power consumption into account to optimize the charging operation for maximal work time. It is also possible to take further constraints into account. Such constraints could be battery stress, e.g., frequent charging/discharging to the maximum/return level, battery life, weather data or predictions, predicted or measured output of a photovoltaic system or variable energy prices. Several different targets can be combined into a weighted average, with higher weights given to targets that should be considered more.

The control unit 6 shown in Fig. 1 optimizes the charging schedule. Alternatively, the mobile control device 3, the charging station 2 or a server can optimize the charging schedule and transmit the optimized/improved the charging schedule to the control unit 6.

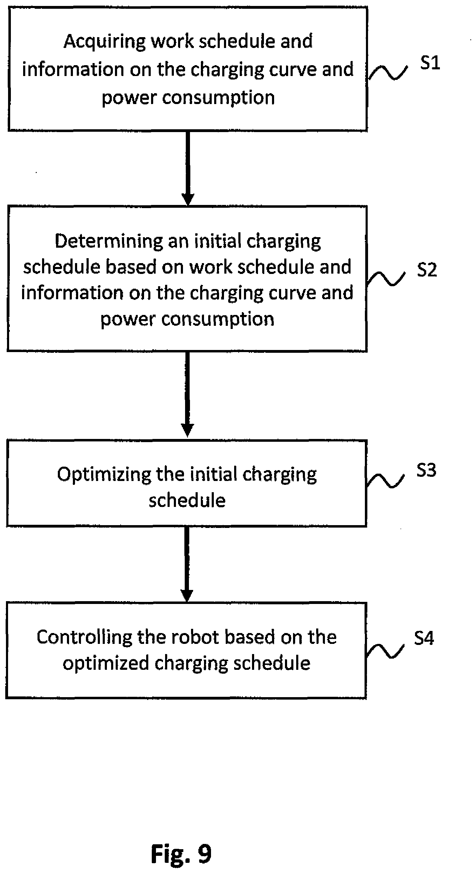

Fig. 9 shows a very simplistic flowchart showing the single steps performed by the method described in detail above.

In step S1, the work schedule and information on charging curve of the energy storage means and power consumption of the autonomous work robot per amount of time are acquired.

In step S2, an initial charging schedule is determined by
- Computing required power for each requested work time slot set by the user using either predefined or measured average power consumption, and
- Scheduling a charging before each requested work time slot in order to bring the battery 13 to a level necessary for the requested work time slot and a charging after each requested work time slot in order to bring the battery to the storage state.

In step S3, iterative optimization of the initial charging schedule is performed until convergence or maximal number of iterations reached by
- determining times within requested work time slots where the robot is not working,
- if there is an idle time in a work time slot then introduce an additional charging time and work time in the work time slot and optimize the times of the charging such that the overall work time within the work time slot is maximized by using a grid search over all possible minutes for start and end time of the charging to find the optimum (maximum) with respect to work time,
- if there are charging times within a work time slot perform an optimization of all charge times using CMA-ES, and
- check if there are scheduled charging's where start equals end time, i.e., zero charge time and remove these.

In step S4, the robot 1 is controlled based on the optimized charging schedule.

The invention discloses an intelligent energy management method that takes the scheduled work times into account for an aligned battery-charging scheme. This can have several options, e.g., reducing charge time, requesting the robot to come to charging station 2 earlier or control target SOC. Optionally, the energy management system might take implications on battery lifetime into account.

### Nomenclature

SOC: State-Of-Charge, battery charge level to which the battery is charged. Usually, in percent of full charge capacity (e.g., 70% or 95%).

Cost function: In mathematical optimization and decision theory, a loss function or cost function (sometimes also called an error function) is a function that maps an event or values of one or more variables onto a real number intuitively representing some "cost" associated with the event. An optimization problem seeks to minimize a loss function. An objective function is either a loss function or its opposite (in specific domains, variously called a reward function, a profit function, a utility function, a fitness function, etc.), in which case it is to be maximized.

CMA-ES: Covariance matrix adaptation evolution strategy (CMA-ES) is a particular kind of strategy for numerical optimization.

## Claims

1. A method for determining a schedule for charging an energy storage means (13) of an autonomous work robot (1), wherein the method comprises the steps of:
acquiring (S1) a work schedule of the autonomous work robot (1); and
determining (S3) the charging schedule based on the work schedule in order to improve a cost function that is optimal when an optimal amount of work time within the work schedule is achieved.

2. The method according to claim 1, wherein
the work schedule contains at least one time span in which the autonomous work robot (1) is allowed to work;
the charging schedule contains at least one charging operation in the time span; and
the cost function is improved by setting the time of the charging operation to increase the total work time within the time span and/or the charging schedule.

3. The method according to claim 2, further comprising
a step (S1) of acquiring information on charging curve of the energy storage means (13) and power consumption of the autonomous work robot (1) per amount of time; wherein
in the determining step (S3), the cost function is improved or optimized at least by optimizing the time of the charging operation to maximize the total work time within the time span based on the information on the charging curve and the power consumption.

4. The method according to claim 3, wherein
in the determining step (S3), the state of charge of the energy storage means (13) is detected during the time span or is predicted for the time span based on the information on the power consumption; and
the energy storage means (13) is to be charged to a target state of charge when the detected or predicted state of charge reaches a minimum threshold and the minimum threshold and/or the target state of charge is varied for optimizing the time of the charging operation.

5. The method according to claim 3 or 4, further comprising
a step of acquiring or learning a work-area specific model of energy consumed by the autonomous work robot per amount of time, wherein
in the determining step (S3), the state of charge necessary to work over the time span is determined based on the work-area specific model.

6. The method according to claim 5, further comprising the steps of:
measuring energy consumption of the autonomous work robot (1) during work operation;
predicting the energy consumption based the work-area specific model;
comparing the measured energy consumption and the predicted energy consumption; and
adapting the minimum threshold in order to optimize the time of the charging operation if a difference between the predicted energy consumption and the measured energy consumption reaches a defined threshold.

7. The method according to anyone of preceding claims, further comprising
a step of detecting or predicting an energy generation of a photovoltaic system; wherein
the energy storage means (13) is charged by renewable energy generated by the photovoltaic system and energy that is not generated by the photovoltaic system; and
the cost function is optimized at least by optimizing the time of the charging operation to maximize the total work time within the work schedule and by maximizing the amount of renewable energy used for charging.

8. The method according to anyone of preceding claims, further comprising
a step of acquiring information on factors having an influence on the life-time of the energy storage means (13) including charging intervals, charging time and/or charge level; wherein,
the cost function is optimized at least by optimizing the time of the charging operation to maximize the total work time within the work schedule and by increasing the life-time of the energy storage means (13).

9. The method according to anyone of preceding claims, further comprising
a step of measuring or predicting the total power consumption for all the charging operations of the charging schedule; wherein,
the cost function is optimized at least by optimizing the time of the charging operation to maximize the total work time within the work schedule and by minimizing the total power consumption.

10. The method according to claim 7, 8 or 9, wherein
the different aspects of the cost function are combined in the weighted manner set by a user.

11. The method according to anyone of the preceding claims, wherein
the cost function is optimized to increase the total work time within the charging schedule using gradient descent, grid search, pattern search, binary search, linear programming, evolutionary optimization or ant algorithms.

12. The method according to anyone of the preceding claims, wherein
the work schedule contains a plurality of time spans in which the autonomous work robot (1) is allowed to work; and the method further comprises the step of
optimizing (S3) the work schedule in order to minimize the total charging times within the time spans and to minimize deviations from the acquired work schedule.

13. A program that, when running on a computer or loaded onto a computer, causes the computer to execute the steps of the method according to anyone of the preceding claims.

14. An apparatus for determining a schedule for charging an energy storage means (13) of an autonomous work robot (1), wherein the apparatus comprises a processor (6) configured to perform the steps of the method according to anyone of claims 1 to 12.

15. An autonomous work system, comprising
the apparatus according to claim 14;
the autonomous work robot (1); and
at least one charging station (2) configured to charge the energy storage means (13) of the autonomous work robot (1).
